# EUROPÄISCHE PATENTSCHRIFT

(11) **EP 1 047 502 B1**
(45) Veröffentlichungstag und Bekanntmachung des Hinweises auf die Patenterteilung: **07.11.2001**
(21) Anmeldenummer: 98966587.2
(22) Anmeldetag: 22.12.1998
(51) Int. Cl.: B03B 9/06, B29B 17/02, B65G 47/51

(54) **VERFAHREN ZUM AUFBEREITEN VON MISCHABFÄLLEN, AUFBEREITUNGSANLAGE SOWIE PUFFERSILOS DAFÜR**
METHOD FOR PROCESSING MIXED WASTE, PROCESSING PLANT AND BUFFER SILOS THEREFOR
PROCEDE DE TRAITEMENT DE DECHETS MIXTES, ET INSTALLATION DE TRAITEMENT ET SILOS TAMPONS UTILISES A CET EFFET

(30) Priorität: 15.01.1998 DE 19801286
(43) Veröffentlichungstag der Anmeldung: 02.11.2000
(73) Patentinhaber: "Der Grüne Punkt" Duales System Deutschland Aktiengesellschaft, 51145 Köln (DE)
(72) Erfinder: WÜBBELS, Alfons, D-48712 Gescher (DE); KÖTTING, Josef, D-48712 Gescher (DE)
(74) Vertreter: Tönhardt, Marion, Dr.
(86) Internationale Anmeldenummer: DE9803802
(87) Internationale Veröffentlichungsnummer: WO9936180

(56) Entgegenhaltungen:
- EP-A- 0 530 934
- WO-A-96/20819
- DE-A- 19 616 623
- FR-A- 1 089 059
- GB-A- 1 498 108
- GB-A- 2 089 754
- US-A- 3 602 380
- US-A- 5 464 100

## Beschreibung

Die Erfindung betrifft ein Verfahren zum Aufbereiten von Mischabfällen, insbesondere von solchen Mischabfällen, die im wesentlichen aus Kunststoffen, Papier-Kunststoff-Verbundstoffen, Glas, Metallen, Papier, Pappe und weiteren Störstoffen bestehen. Die Erfindung betrifft weiterhin eine Aufbereitungsanlage zum Durchführen des Verfahrens.

Bei der Binführung des Dualen Systems im Hinblick auf die Durchführung der Verpackungsordnung in Deutschland stellte sich als besondere Herausforderung die ordnungsgemäße Verwertung der gesammelten Kunststoffe heraus. Dabei kam eine völlig neue Fraktion, nämlich die der Mischkunststoffe, auf den Markt. Für die Mischkunststoffe in ihrer Heterogenität und schwankenden Zusammensetzung müssen spezielle Verwertungswege gefimden werden. Für die Verwertung von Mischkunststoffen kommt hauptsächlich eine rohstoffliche Verwertung in Frage. Voraussetzung dafür ist eine Aufbereitung des Materials zu einem Agglomerat, das vorgegebenen Spezifikationen genügt. Da die Kunststoffe im Rahmen des Dualen Systems zusammen mit einer Reihe von Störstoffen gesammelt werden, sind Verfahren gefragt, die den Sortieraufwand auf ein vertretbares Maß reduzieren, aber dennoch einen bestimmten Reinheitsgrad des Kunststoffmaterials sicherstellen.

Metallische Störstoffe können mittels Magnetscheidem und Wirbelstromscheidern ausgesondert werden. Schwere Kunststoffe und andere schwere Fremdteile werden in der Regel mit Hilfe einer Windsichtung aus dem aufzubereitenden Material abgetrennt. Weiter sind verschiedene Verfahren bekannt, um das Papier insbesondere aus Papier-Kunststoff-Verbundstoffen zu entfernen.

Mit der verbesserten Aussonderung von Störstoffen können heutzutage Trockenverfahren zur Aufbereitung von Mischkunststoffen eingesetzt werden, mit denen durch vergleichsweise geringen Energieeinsatz ein Kunststoffagglomerat von hoher Güte erzeugt werden kann. Weite Verbreitung hat dabei das in der WO 96/20819 offenbarte Verfahren gefunden, bei dem das aufzubereitende Material zunächst zerkleinert und von magnetischen Stoffen befreit wird. Das zerkleinerte Material wird dann in einem Agglomerator durch Pressen kompaktiert oder thermisch agglomeriert, wobei flüchtige Stoffe, wie z. B. Wasserdampf, Asche und Papier, durch eine Absaugvorrichtung abgesaugt werden. Dann wird das agglomerierte Material getrocknet und anschließend gesiebt.

Aus Wirtschaftlichkeitsgründen ist es wünschenswert, einen kontinuierlichen Betrieb der Anlage zu sichern. Dieses vermag das ans der WO 96/20819 bekannte Verfahren nicht zu leisten. Der Ausfall einer Anlagenkomponente fuhrt in der Regel zum Stillstand der gesamten Anlage und führt Ausfallzeiten aufgrund von Reparatur- und Wartungsarbeiten nach sich. Ein weiterer Nachteil besteht darin, daß Papier nicht in nenneswertem Maße aus dem Abfallstrom entfernt wird. Aus dem Obengesagten wird deutlich, daß bei dem Verfahren nach der WO 96/20819 Papier nur als flüchtiger Stoff entfernt wird, so daß beispeilsweise Kunststoff-Papier-Verbunde nicht oder nicht vollständig aufgeschlossen werden. Das Agllomerat wird daher immer noch einen beträchtlichen Anteil an Papier enthalten.

Die US 5 646 100 beschreibt eine Sortiervorrichtung für feste Abfälle, die aus einer Speicherstation mit einem Austragsbereich, mehreren nacheinander geschalteten Förderbereichen, einer Sortiervorrichtung und einem Windsichter besteht. Dabei ist ein zweiter Satz von Förderbändern unmittelbar hinter einen ersten Satz von Förderbändern geschaltet, wobei die Fördergeschwindigkeit auf dem zweiten Satz von Förderbändern gegenüber dem ersten erhöht ist. Dies dient dazu, für die anschließende händische Sortierung eine Stapeltiefe des Abfalls auf dem zweiten Satz von Förderbändern zu begrenzen.

Es ist die Aufgabe der vorliegenden Erfindung, ein Verfahren zum Aufbereiten von Mischabfällen, die im wesentlichen aus Kunststoffen, Pappe, Papier, Papier-Kunststoff-Verbundstoffen, Glas, Metallen und Störstoffen bestehen, bereitzustellen.

Diese Aufgabe wird durch ein Verfahren nach Anspruch 1 gelöst. Vorteilhafte Ausgestaltungen sind Gegenstand der Unteransprüche. Eine Anfbereitungsanlage zum Durchführen des erfindungsgemäßen Verfahrens ist in Anspruch 9 definiert.

Ein erfindungsgemäßes Verfahren zum Aufbereiten von Mischabfällen für den Befrieb einer kontinuierlich arbeitenden trockenmechanischen Aufbereitungsanlage, welche eine Mehrzahl von aufeinanderfolgenden durch jeweils zumindest eine Transportstrecke verbundene Bearbeitungsstationen zumindest mit den Schritten in der Abfolge Metallscheidung, Windsichtung und Papierentfemung aufweist, zwischen denen weitere Schritte vorgesehen sein können oder die unmittelbar aufeinanderfolgen, ist dadurch gekennzeichnet, daß der Gut-Materialstrom bei der Übergabe zur letzten Transportstrecke vor der Bearbeitungsstation eine Beschleunigung erfährt, so daß die durchschnittliche tatsächliche Geschwindigkeit der Partikel des Gut-Materialstroms auf der letzten Transportstrecke unmittelbar vor Eintritt in die Bearbeitungsstation der Metallscheidung kleiner ist als unmittelbar vor Eintritt in die Bearbeitungsstation der Windsichtung und diese wiederum kleiner ist als die durchschnittliche Geschwindigkeit unmittelbar vor Eintritt in die Bearbeitungsstation der Papierentfernung.

Dabei ist der Gut-Materialstrom der Materialstrom des qualitativ hochwertigeren Materials, also des Materials, das im weiteren Verlauf des Verfahrens noch weiter aufbereitet werden soll, und die tatsächliche Geschwindigkeit der Partikel ist der tatsächlich zurückgelegte Weg des Partikels pro Zeit.

Bevorzugt wird der Mischabfall-Strom zwischen zwei benachbarten Stationen mit im wesentlichen konstanter Geschwindigkeit auf der jeweiligen Transportstrecke gefördert.

Es kann weiter vorgesehen sein, daß in zumindest einer der Stationen ein Vorrat an gegebenenfalls vorbehandeltem Material zeitweilig gehalten wird.

Eine Ausführungsform des erfindungsgemäßen Verfahrens ist durch folgende Schritte gekennzeichnet:
(a) Zerkleinern der Mischabfälle;
(b) Zwischenspeichem der zerkleinerten Mischabfälle;
(c) Gleichmäßiges Weiterfördern der zwischengespeicherten Mischabfälle;
(d) Abtrennen von magnetischen Metallteilen;
(e) Abtrennen von unmagnetischen Teilen aus Materialien mit einem spezifischen Gewicht, welches ein festlegbares minimales spezifisches Gewicht überschreitet;
(f) Abtrennen von Papier, beispielsweise aus den Papier-Kunststoff-Verbundstoffen;
(g) Zwischenspeichern der erhaltenen Kunststofffraktion und
(h) Agglomerieren der Kunststofffraktion.

Unter Agglomerieren soll dabei das Verdichten zu einem Schüttgut verstanden werden unter Binbringen von Heiz- und/oder Friktionsenergie in das zu agglomerierende Material.

Gegebenenfalls können sich weitere Verfahrensschritte anschließen, beispielsweise kann nach dem Zwischenspeichern der erhaltenen Kunststofffraktion ein weiteres Abtrennen von unmagnetischen Teilen erfolgen. Ferner kann es vorteilhaft sein, den agglomerierten Kunststoff auf eine feste Korngröße zu zerkleinern. Unter Umständen ist es sinnvoll, anschließend danach ein weiteres Mal magnetische Metallteile abzutrennen, die erst nach dem Zerkleinerungsprozeß einer magnetischen Scheidung zugänglich werden.

Nach einer weiteren Ausführungsform wird das erfindungsgemäße Verfahren so geführt, daß das zu bearbeitende Material auf bestimmten Transportstrecken nur pneumatisch gefördert wird.

Die Erfindung beruht auf der Erkenntnis, daß die Abtrennung von Störstoffen in den diversen Störabscheidern erleichtert wird, wenn der Strom des zu behandelnden Abfallmaterials beschleunigt wird, also praktisch eine "Aufweitung" des Materials erfolgt.

Ein kontinuierliches Verfahren kann leicht geführt werden, wenn dafür gesorgt wird, daß an kritischen Stellen des Aufbereitungsprozesses eine Zwischenspeicherung des bis dahin bearbeiteten Materials erfolgt Wie bereits eingangs ausgeführt, sind die Abfallzerkleinerer oder Shredder solche kritischen Komponenten. Daher ist bei einer Aufbereitungsanlage in der Regel eine Vielzahl solcher Shredder vorgesehen, die alle in einen Puffersilo arbeiten. Der Ausfall eines Shredders führt dabei nicht zum Stillstand der Anlage, da immer noch Material aus dem Puffersilo zu den nachfolgenden Anlagekomponenten gefördert werden kann. Dabei kann auch der bekannte Vorteil eines Puffersilos ausgenutzt werden, das er auf das vorzerkleinerte Material homogenisierend wirkt und dieses in gleichmäßiger Zusammensetzung auf die nachfolgenden Anlagekomponenten gegeben werden kann. Shredder oder Abfallzerkleinerer pulsieren im Betrieb sehr stark, was eine gleichmäßige Beschickung der nachfolgenden Störstoffabscheider schwierig macht. Der Puffersilo wirkt somit auch für eine mechanische Entkopplung an Anlagenkomponenten.

Anschließend an den Puffersilo kann mindestens ein Magnetabscheider vorgesehen sein, weiter mindestens eine Einrichtung zum Abtrennen von unmagnetischen Teilen aus Materialien mit einem spezifischen Gewicht, welches ein festlegbares minimales spezifisches Gewicht überschreitet. Es hat sich als vorteilhaft herausgestellt, sogenannte Fallrohrsichter zu verwenden. Mit derartigen Fallrohrsichtern werden metallische und nichtmetallische schwere Teilchen ausgefiltert, so daß in der Regel ein Wirbelstromabscheider entbehrlich sein wird. Die Anlage umfaßt weiterhin mindestens eine Vorrichtung zum Abtrennen von Papier beispielsweise aus den Papier-Kunststoff-Verbundstoffen, der bzw. denen ein Puffersilo nachgeschaltet ist, in dem die Kunststofffraktion aus jeder Vorrichtung zum Abtrennen von Papier gesammelt wind. So wird es möglich, einen kontinuierlich arbeitenden Scheibenverdichter einzusetzen, der beispielsweise als CV 50 der Firma Neztsch Condux, Hanau, erhältlich ist.

Die homogenisierende und vergleichmäßigende Wirkung des Puffersilos, in dem die Kunststofffraktion gesammelt wird, kann dazu ausgenutzt werden, eine weitere Vorrichtung zum Abtrennen von schweren unmagnetischen Teilen nachzuschalten.

Ein Puffersilo für eine Aufbereitungsanlage, der dem Shredder bzw. den Shreddem nachgeschaltet ist, besteht aus einem Gehäuse mit zumindest einer Öffnung im oberen Bereich des Gehäuses zum Einbringen des zwischenzuspeichernden Materials und zumindest einer Austragsöffnung für das Material und ist dadurch gekennzeichnet, daß im Bodenbereich des Gehäuses eine Vielzahl von Austragsschnecken vorgesehen ist, wobei die Austragsschnecken so angeordnet sind, daß sie in ihrer Wirkung die gesamte Bodenfläche des Gehäuses überstreichen, und daß mindestens eine Vorlaufschnecke vorgesehen ist, die den Materialaustrag aus den Austragschnecken homogenisiert. Damit wird verhindert, daß größere Mengen an Material überstürzt in die Kammern des Kratzkettenförderers gelangen.

Dabei können die Austragschnecken mit jeweils unterschiedlichem Drehsinn arbeiten, beispielsweise können sie wahlweise links- bzw. rechtsdrehend arbeiten.

Vorteilhaft sind dabei die Austragschnecken parallel zueinander angeordnet, und die Vorlaufschnecke ist gegenüber den Austragschnecken um 90° verdreht angeordnet. Die Vorlaufschnecke kann ebenfalls wahlweise links- oder rechtsdrehend arbeiten.

Ein Puffersilo für eine Aufbereitungsanlage, in dem die Kunststofffraktion gesammelt wird, besteht aus einen Gehäuse mit zumindest einer Öffnung im oberen Bereich des Gehäuses zum Einbringen des zwischenzuspeichernden Materials und zumindest einer Austragöffnung für das Material und ist dadurch gekennzeichnet, daß zumindest eine unter Druck stehende Auflockerungsschnecke für im Puffersilo gespeichertes Material vorgesehen ist und daß eine Absaugeinrichtung Luft aus dem Gehäuse der zumindest einen Auflokerungsschnecke zuführt. Weiter sind spezielle Austragschnecken im Puffersilo vorgesehen, die das zwischengespeicherte Material zu der zumindest einen Auflockerungsschnecke fördert.

Es hat sich als zweckmäßig herausgestellt, das Gehäuse zum Bodenbereich hin konisch bzw. trapezförmig - je nach Grundform des Gehäuses - zu erweitern, um Brückenbildung im Silo zu vermeiden.

Im folgenden soll die Erfindung anhand der beigefügten Zeichnung näher erläutert werden. Dabei zeigt:
- Figur 1: mit Teilbildern A, B, C, D und E in schematischer Weise die Prozeßführung für ein Aufbereitungsverfahren unter Benutzung der Erfindung;
- Figur 2: eine Längsschnittansicht eines einem oder mehreren Abfallzerkleinerem nachgeschalteten Puffersilos;
- Figur 3: eine Längsschnittsansicht eines der Papierscheider nachgeschalteten Puffersilos;
- Figur 4: xeine Längsschnittansicht eines Fallrohrsichters der Station 6.;
- Figur 5: eine Längsschnittansicht eines Fallrohrsichters der Station 9.); und
- Figur 6: eine Längsschnittansicht eines Agglomerators der Station 10.).

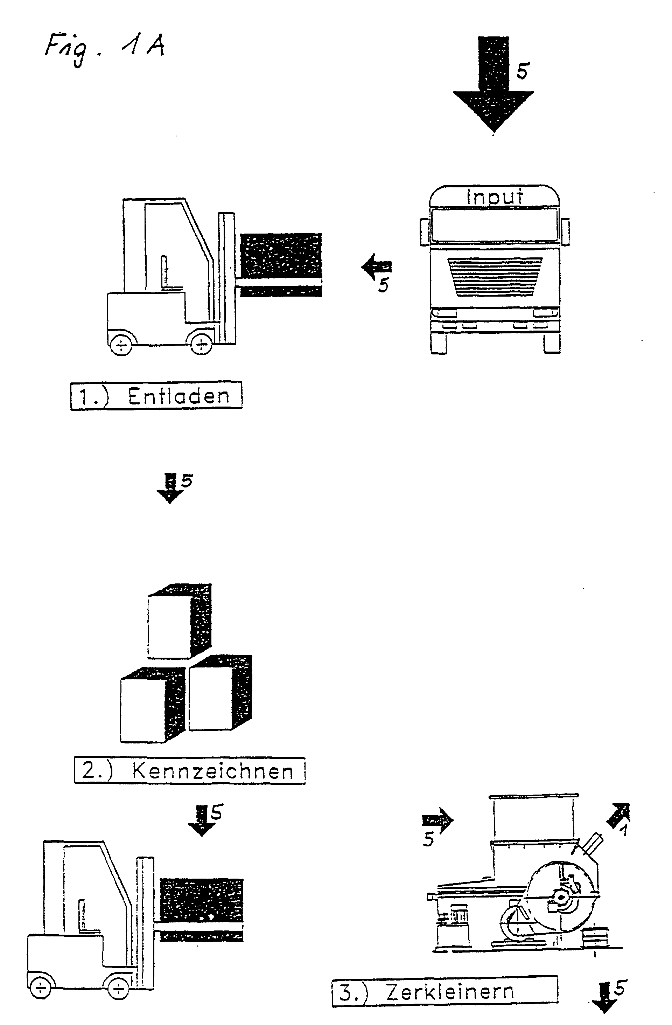

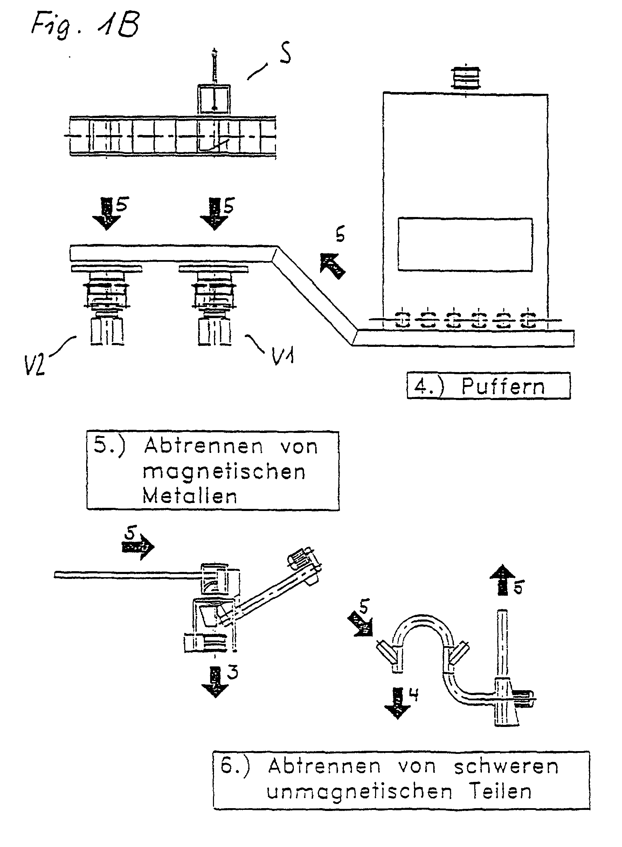

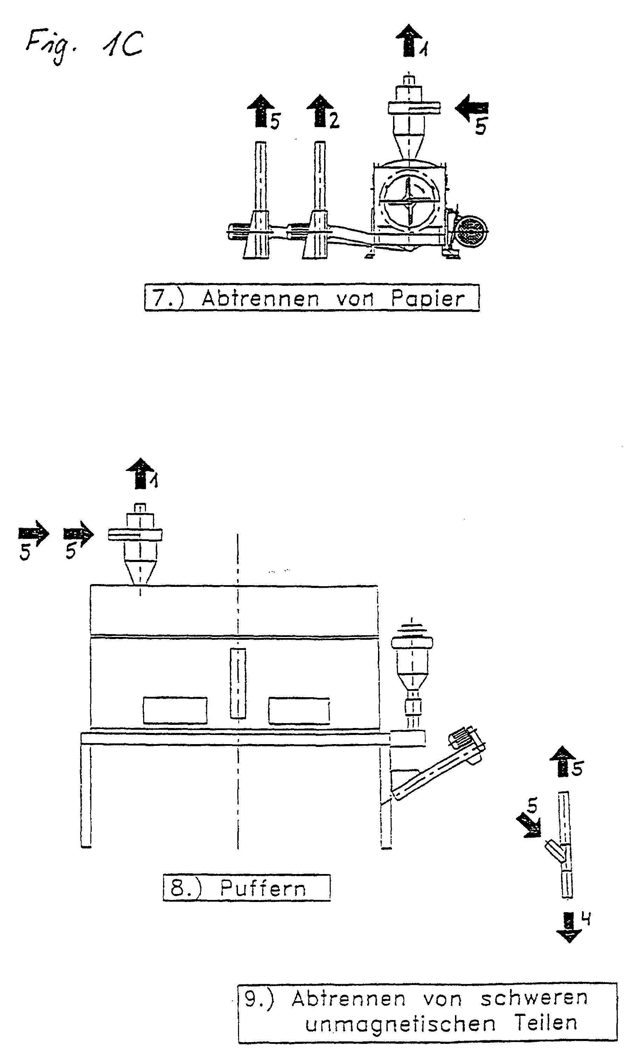

In den Figuren 1A bis E ist ein Aufbereitungsverfahren für die Herstellung eines Kunststoff-Agglomerates mit Stationen 1. bis 18. schematisch dargestellt. Dabei zeigen Pfeile den Verlauf der Masseströme. Die mit der Ziffer "1" bezeichneten Pfeile geben den Verlauf der Förderluft an, Pfeile mit der Ziffer "2" bezeichnen den Massestrom von Papier. Pfeile mit der Ziffer "3" bezeichnen den Massestrom für magnetische Metalle, Pfeile mit der Ziffer "4" den für nichtmagnetische Störstoffe, diese enthalten hauptsächlich Glas, aluminiumbeschichtete Kunststoffe, feuchte und nasse Papierklumpen, Steine, Holz, Nichtverpackungen mit einem Kunststoffanteil von weniger als 50 % und unmagnetische Metalle. Pfeile mit der Ziffer "5" schließlich bezeichnen den Strom, der zu dem gewünschten Mischkunststoff führt, welcher zu Agglomerat weiterverarbeitet wird, mit abnehmendem Anteil von Störstoffen oder anderen Wertstoffen, die in den einzelnen Stationen herausgefiltert werden.

Der verunreinigte Mischkunststoff wird, wie in Figur 1A dargestellt, angeliefert und entladen (Station 1.)) sowie gekennzeichnet (Station 2.), so daß Störstoffe, die zu einer Verunreinigung des Agglomerates oder zu Schäden an Komponenten der Anlage führen, eindeutig zugeordnet werden können. Das angelieferte Material wird zunächst in einem an sich bekannten Abfallzerkleinerer oder Shredder auf eine bestimmte Korngröße zerkleinert (Station 3.).

Die in den Shredder eingebrachten Kunststoffballen drückt ein Niederhalter mit einem definierten Anpreßdruck auf den Rotor. Die Fraktion wird so lange vom Rotor zerkleinert, bis das eingebrachte Material durch ein im Bodenbereich der Mühle vorgesehenes Sieb fällt, das einen Lochdurchmesser von beispielsweise 45 mm hat. Durch den Einsatz verschiedener Siebgrößen kann der Durchmesser des zerkleinerten Materials an die Bedürfnisse der Anlage angepaßt werden.

Das zerkleinerte Material wird dann, zur Darstellung in Figur 1B übergehend, mittels eines Kratzkettenförderers oder dergleichen zu einem Puffersilo (Station 4.) transportiert. Die Praxis hat gezeigt, daß Kratzkettenförderer den rauhen Bedingungen, die in der Aufbereitungsanlage herrschen, an besten gewachsen sind. Die besonders anfälligen Bodenbleche sind von vornherein als Verschleißteil ausgeführt und somit austauschbar. Als Alternative sind Förderbänder denkbar; diese beiden Typen der Förderer können je nach Wahl auf den mechanisch bedienten Transportstrecken eingesetzt werden.

Der Puffersilo der Station 4. - ebenso wie später der Puffersilo der Station 8. - dienen als vorrathaltende Stationen.

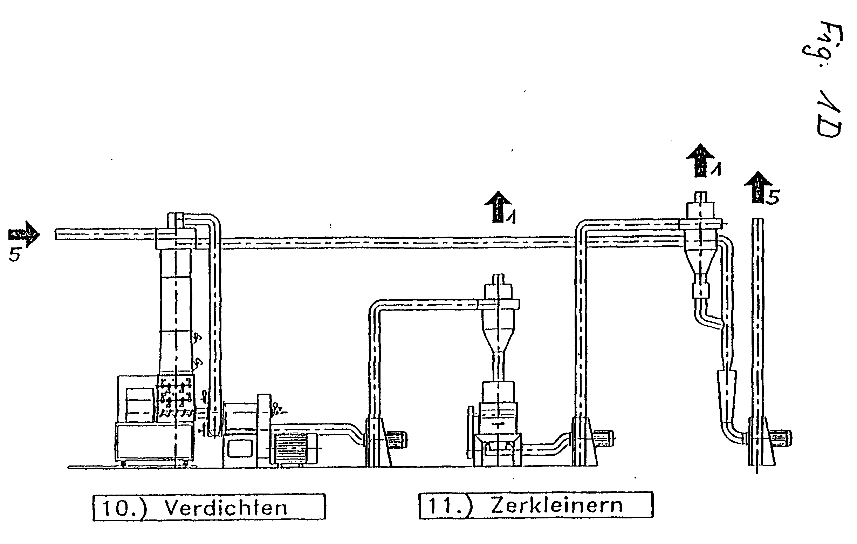

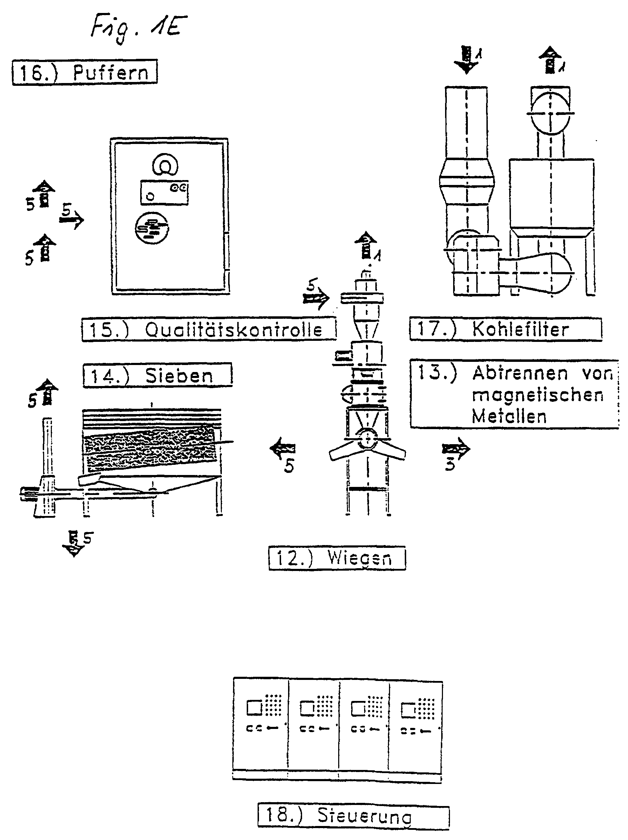

Wenn mehrere Abfallzerkleinerer in Parallelschaltung in der Anlage vorgesehen sind, arbeiten sie alle über jeweils zugeordnete Transportstrecken in einen Puffersilo. Es ist auch möglich, die Abfallzerkleinerer in Reihe zu schalten, dann wäre nur ein Förderaggregat notwendig. Der Füllgrad des Puffersilos wird manuell überwacht. Beim Überschreiten eines maximalen Füllstandes schaltet der Bediener eine oder mehere der Anlagen vor dem Puffersilo ab. Beim Erreichen des unteren Füllstandes schaltet er die Anlage wieder ein. Die Überwachung des Füllstandes kann auch automatisch erfolgen, z.B. durch Lichtschranken oder Drehflügelmelder, wobei beim Überschreiten eines ersten bestimmten Füllstandes eine oder mehrere Anlagen automatisch abgeschaltet und nach einem Unterschreiten eines zweiten bestimmten Füllstandes wieder eingeschaltet werden. Bauliche Einzelheiten des Puffersilos sind in Figur 2 dargestellt und werden weiter unten beschrieben.

Ein abtransportierender Kratzkettenförderer wird mit Material aus dem Puffersilo gleichmäßig beschickt und läuft mit einer konstanten Geschwindigkeit von beispielsweise 0,25 m/s. Dieser Förderer weist zwei Öffnungen auf, wobei eine Öffnung über einen pneumatischen Schieber S im Querschnitt variabel ist. Von diesem Förderer wird das Material gleichmäßig auf zwei Vibrationsrinnen V1, V2 verteilt, die selbst etwas schneller als der Kratzkettenförderer mit einem Geschwindigkeit von 0,33 m/s das Material weiterbewegen. Die in Laufrichtung erste Vibrationsrinne V1 wird bei Bedarf geöffnet, wenn beispielsweise zwei nachfolgende Anlagestrecken beschickt werden sollen. Dabei sind drei Stellungen des Schiebers S möglich, je nachdem, ob nur eine der Anlagestrecken beschickt werden soll oder beide Anlagestrecken gleichmäßig beschickt werden sollen. Über der in Laufrichtung zweiten Vibrationsrinne V2 hat der Kratzkettenförderer nur eine Öffnung.

Die Vibrationsrinnen V1, V2 transportieren das gesamte Material über Magnettrommeln (Station 5.), wobei hier entsprechend der Anzahl der Vibrationsrinnen zwei Magnettrommeln vorgesehen sind. Auf den Vibrationsrinnen sinken die Metallteile infolge der Schwerkraft und aufgrund der Rüttelbewegung innerhalb der Fraktion nach unten. Dies ermöglicht eine fast vollständige Trennung der schweren Metallteile vom leichteren Kunststoff. Optimal wäre, wenn auf den Magnettrommeln die Metallteile einlagig aufgebracht werden. Dieses wird in der Praxis schwer zu erreichen sein.

Der Magnet innerhalb der Magnettrommel hat einen Wirkungsradius von 180°. Der Mischkunststoff fällt in einem Winkel von 90° bis 180° in einen Trichter. Die magnetischen Metallteile bleiben an der Trommel haften, werden durch die Rotation der Trommel aus dem Zentrum der magnetischen Feldkräfte gebracht und fallen in einen zweiten, dahinter angebauten Trichter. Das Metall wird über einen Kratzkettenförderer abtransportiert und in einem Container gesammelt. Es hat sich herausgestellt, daß die Verwendung von Trommeln der üblicherweise verwendeten Überband-Magneten überlegen ist, da bei den Ietzteren die anhaftenden Metallteile Folienteile mit einklemmen. Hierdurch wird der Kunststoffaustrag über die Magnetbänder unerwünscht erhöht. Ebenso werden kleine Metallteile nicht abgetrennt.

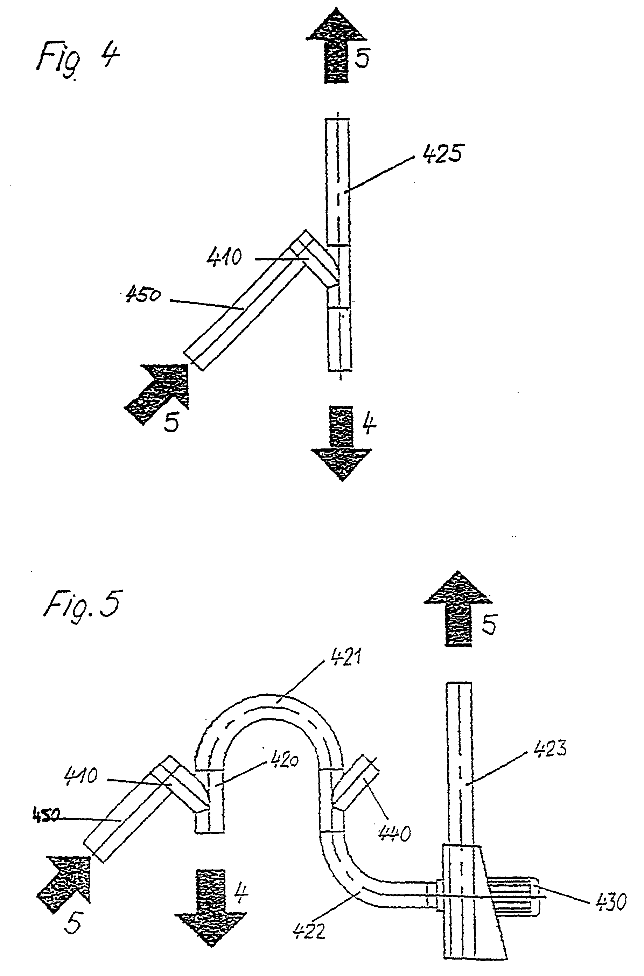

Den weiteren Transport der Fraktion übernehmen Transportschnecken, die das Material mit einer Materialfördergeschwindigkeit von beispielsweise 0,51 m/s fördern. Sie lockern das Material für die nachgeschalteten Fallrohrsichter (Station 6.) auf, in denen das Abtrennen von schweren unmagnetischen Teilen mit Hilfe von Unterdruck erfolgt und der Materialstrom auf 5 bis 25 m/s beschleunigt wird. Bauliche Einzelheiten des Fallrohrsichters sind in Figur 4 bzw. 5 dargestellt.

Die schwereren Störstoffe und Anhaftungen fallen, hier nicht dargestellt, auf Kratzkettenförderer, welche das separierte Material sammeln und in Container transportieren. Übrig bleibt der verwertbare Mischkunststoff, der über Gebläse pneumatisch zur Papierabtrennung gefördert wird. Der Luftstrom hat eine Geschwindigkeit von beispielsweise 25 m/s.

Im Zusammenhang mit dem Puffersilo der Station 4.), der eine vorrathaltende Station im Sinne der Erfindung bildet, wird deutlich, daß die Geschwindigkeit des Mischabfall-Stroms zwischen zwei benachbarten Station zwar im wesentlichen konstant ist, der Mischabfall zur jeweils nachfolgenden Station aber mit einer Geschwindigkeit transportiert wird, die höher ist als die Geschwindigkeit, mit der zur vorangegangenen Station transportiert worden ist, wobei die Partikel des Mischabfall-Stromes-somit am Übergabeort zur Transportstrecke zur nachfolgenden Station beschleunigt werden. Auch zwischengeschaltete Förderelemente, wie die Vibrationselemente, können mit einer Geschwindigkeit arbeiten, die gemäß diesem Steigerungsprozeß ausgewählt ist. Das zugrundeliegende Prinzip ist es, den Materialstrom zu vergleichmäßigen und zu beschleunigen, um die möglichst optimale Abscheidung von Störstoffen zu bewirken. Dies geschieht dadurch, daß die Materialstromdichte durch die oben erwähnte Beschleunigung der Partikel verkleinert wird.

Es soll hier angemerkt werden, daß auch die in einigen Stationen verwendeten. Auflockerungsschnecken eine Vergleichmäßigung des Materialstroms besorgen. Das Mischabfall-Material enthält Feuchtigkeit und Schmutz, so daß die geshredderten Partikel zu Verklebungen neigen werden. Die Partikel neigen weiterhin zu Verklemmungen, beispielsweise aufgrund scharfer Kanten an Metallteilchen. Sowohl die Verklebungen als auch die Verklemmungen werden in den Auflockerungsschnecken gelöst.

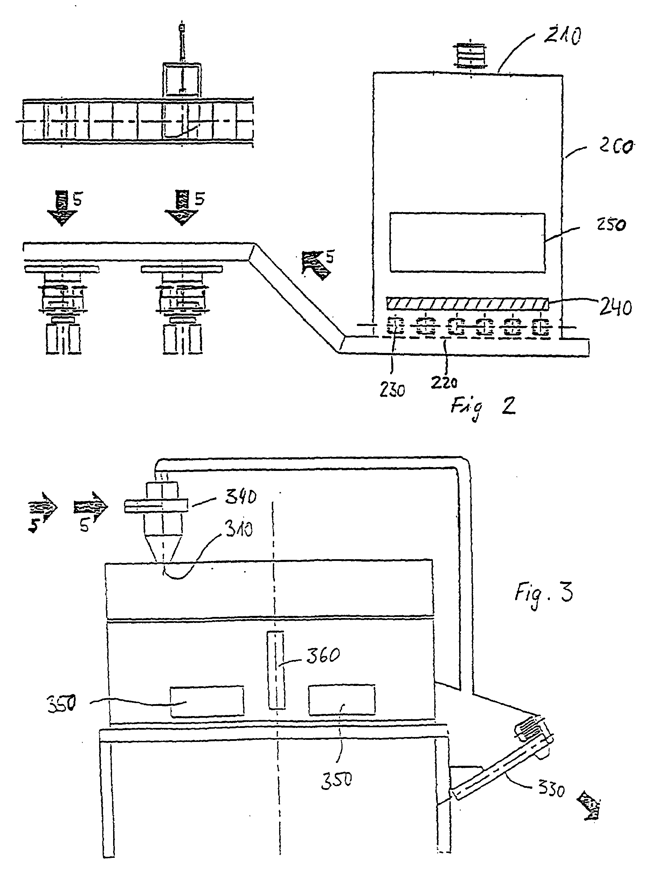

Im Zusammenhang mit Figur 1C ist das Abtrennen von Papier schematisch dargestellt (Station 7.). In diesem Prozeßschritt soll insbesondere der anhaftende Papieranteil aus dem Mischkunststoff herausgelöst werden. Zu diesem Zweck sind Papiermühlen vorgesehen, in die das Material jeweils über Zyklonabscheider fällt. Innerhalb des Gehäuses der Papiermühle schleudert ein Rotor die Fraktion mittels Zentrifugalkraft nach außen gegen einen Siebkorb. Mittels speziell gestalteter Papierscheider, wie sie beispielsweise in der DE 196 16 623 AI beschrieben sind, wird zusätzlich eine hohe Friktion erzeugt. Das Papier wird dabei in kleinste Teile zerfetzt, tritt durch den Siebkörper nach außen und wird auf diesem Wege von einem Papierabsauggebläse abgezogen und über eine Verdichterschnecke in einen Container befördert. Der viel zähere Kunststoff verbleibt innerhalb des Siebkörpers und wird durch eine geeignete Paddelstellung des Rotors und durch den Unterdruck eines Materialabsauggebläses zu einem weiteren Puffersilo (Station 8.) gefördert, der im Zusammenhang mit Figur 3 beschrieben wird. Die bei der Friktion entstehende Wärme sorgt zusätzlich für eine Trocknung der Fraktion. Beide Fraktionen, Kunststoff und Papier, trennen Zyklonabscheider von der Förderluft. Die Prozeßluft wird über eine Aktivkohle-Filteranlage (wie Station 17.) gereinigt und nach außen geleitet. Über eine Absaughaube erzeugt ein Gebläse einen Unterdruck im Puffersilo, um Staubbildung zu vermeiden. Anschließend erfolgt ein weiteres Abtrennen von schweren unmagnetischen Teilen innerhalb eines Fallrohrsichters (Station 9.), der im Zusammenhang mit Figur 4 bzw. Figur 5 beschrieben wird. Die Saugleistung in dem Fallrohrsichter wird so eingestellt, daß schwere Teile nach unten wegfallen. Die leichtere Fraktion wird durch den Luftstrom mitgerissen und zum nächsten Prozeßschritt gefördert. Nach dem Passieren der zweiten Fallrohrsichtung hat die Kunststofffraktion einen durchschnittlichen Aschegehalt, d. h. einen Anteil inerter Stoffe (Glührückstand), von weniger als 4,5 %.

Das Komprimieren des Mischkunststoffes wird, wie in Figur 1D schematisch dargestellt, in einem oder mehreren parallel geschalteten Agglomeratoren bzw. Kompakteren von an sich bekanntem Typ vorgenommen (Station 10.). Anschließend wird auf eine festgesetzte Korngröße von beispielsweise 1,0 cm zerkleinert (Station 11.). Auch den Agglomeratoren wird der Mischkunststoff pneumatisch zugeführt. Dabei wird die optimale Füllhöhe durch zwei Vibrationsgrenztaster oder Lichtschranken reguliert. Im Einlauftrichter eines Agglomerators sorgen Rührwerkswellen für eine kontinuierliche Beschikung der Einlaufschnecke. Im Agglomerator wird der Mischkunststoff zu einem rieselfähigen Material mit einem spezifische Gewicht von mehr als 300 g/l aufbereitet. Einzelheiten des Agglomerators werden im Zusammenhang mit Figur 5 beschrieben.

Nach diesem Prozeßschritt fördert ein Gebläse das kompaktierte Material zur Nachzerkleinerung (Station 11.). Nachschneidmühlen weisen eine Eindüsung auf, um durch Zuführen eines Wasser-Luft-Gemisches für eine Kühlung der Mühlen zu sorgen, so daß eine zu starke Plastifizierung des Material vermieden wird. Hiermit wird ausgeschlossen, daß durch zu starke Erhitzung des Materials Verstopfungen auftreten. Zwischen der Station 10.) und der Station 11.) ist zur Förderung das bereits erwähnte (Zentral-) Gebläse angeordnet. Es kann vorteilhaft sein, zusätzlich eine Wasser-Luft-Mischung in Form eines Nebels in die Leitung zwischen der Station 10.) und der Station 11.) einzudüsen, um die Oberfläche des aus dem Kompaktor austretenden Materials zu plastifizieren und das Auftreten von Verklebungen zu verhindern. Der eigentliche Abkühlprozeß erfolgt allerdings in der Station 11.), wo aufgrund der großen Geschwindigkeiten in der Mühle eine schnelle Abfolge Abschrecken-Schneiden-Abschrecken ... bis auf die endgültige Korngröße des Materials stattfindet. Dabei wird der Feuchtigkeitsgehalt so geregelt, daß in dem Agglomerat kein Restwasser vorliegt Dies bedeutet etwa 20 bis 40l Wasser pro 500 kg Kunststoffmaterial.

Wie in Figur 1E gezeigt, findet anschließend daran das Wiegen (Station 12.) des erarbeiteten Agglomerates statt, wobei eine Prallwaage verwendet wird, die an sich bekannt ist und die sich im Zusammenhang mit der pneumatischen Förderung des Materials als vorteilhaft erwiesen hat Anschließend wird nochmals für ein Abtrennen von magnetischen Metallen (Station 13.) gesorgt. Das Agglomerat durchläuft dann eine rotierende, geneigte Siebtrommel (Station 14.), wobei alle Partikel, die einen geringeren Durchmesser als 10 mm haben, durch das Sieb fallen. Ein Gebläse fördert das im Trichter anfallende Agglomerat zu den Fertigprodukt-Silos. Partikel, die nicht durch das Sieb fallen, fördert die Siebtrommel in Neigungsrichtung nach außen. Dieses Material wird in den Puffersilo (Station 8.), der vor der Kompaktierung vorgesehen ist, rückgeführt. Eine Qualitätskontrolle (Station 15.) sorgt dafür, daß die Richtlinien bezüglich der Produktspezifikation für Agglomerate für rohstoffliche Verwertung eingehalten werden. In Puffersiloeinheiten (Station 16.) sind Staubfilter und Rütteleinrichtungen vorgesehen, der Materialaustrag erfolgt über eine waagerechte Schnecke in Silofahrzeuge. Eine geeignete Anlagensteuerung (Station 18.) übernimmt Antrieb und Überwachung der Anlagenkomponenten und schaltet ggf. bei kritischen Grenzwerten vor der Station, an der die Störung auftritt, ab.

Das Verfahren wir mit einem durchgehenden Prozeßluftstrom geführt, wobei die Prozeßluft nur gereinigt (Station 17.) abgelassen wird.

Figur 2 zeigt einen Puffersilo, in dem das Material von allen Shreddern gesammelt wird. Die Speicherkapazität eines solchen Puffersilos beträgt beispielsweise 40 m³. Der Puffersilo besteht aus einem Gehäuse 200, in das zerkleinerter Mischabfall mit Hilfe von Kratzkettenförderern, in der Figur schematisch über der Öffnung 210 dargestellt, durch die Öffnung 210 eingetragen wird. Das zerkleinerte Material fällt dann in den Bodenbereich des Gehäuses 200, in dem sechs parallel montierte Austragschnecken 230 installiert sind. Sie bedecken die gesamte Bodenfläche des Gehäuses 200 und wirken so, daß eine Brückenbildung des zerkleinerten Materials verhindert wird. So kann das Gehäuse 200, falls dies nötig werden sollte, auch vollständig entleert werden. Gegenüber den Austragschnecken 230 um 90° versetzt ist eine Vorlaufschnecke 240, die für eine gleichmäßige Beschickung des abtransportierenden Kratzkettenförderers sorgt. Die Drehzahl der Vorlaufschnecke 240 ist etwas geringer als die Drehzahl der Austragschnecken 230, auf die Fördermengen bezogen, beispielsweise ist die Drehzahl der Vorlaufschnecke 240 16 l/min, während die Drehzahl einer Austragschnecke 230 21 l/min beträgt.

In Figur 3 ist ein Puffersilo dargestellt, in dem die Kunststofffraktion gesammelt wird. Auch dieser besteht aus einem Gehäuse 300, das aber, um Brückenbildung zu vermeiden, zum Bodenbereich hin - in der Zeichnung nicht dargestellt - konisch bzw. trapezförmig erweitert ist. Die Füllung überwacht eine Füllstandskontrolle mit Vibrationsanzeigern hinter dem Sichtfenster 360. Zusätzlich ermöglichen zwei Sichtfenster 350 eine optische Prüfung des Füllstandes. Das Material der Kunststofffraktion wird über eine Öffnung 310 in das Gehäuse 300 eingetragen. Ein Gebläse 340 erzeugt einen Unterdruck im Gehäuse 300, so daß Staubbildung vermieden wird. Die abgesaugte, mit Kunststoffpartikeln angereicherte Luft wird Auflockerungsschnecken 330, die ebenfalls unter Unterdruck stehen, zugeführt. In dem Gehäuse 300 sind weiterhin Austragschnecken (nicht gezeigt) vorgesehen, die das Kunststoffmaterial zu den Auflockerungsschnecken 330 fördern.

Figur 4 zeigt eine Längsschnittansicht eines einfachen Fallrohrsichters gemäß der Erfindung. Dabei wird ein Massestrom 5 in einem Schneckenförderer 450 mit Schneckenwendel 451 fluidisiert und vereinzelt und der so vorbereitete Massestrom 5 durch einen Zuführungsstutzen 410, dessen Längsachse mit der Längsachse eines Separationsrohres 425, das vertikal verläuft, einen Winkel von etwa 45° bildet, dem Separationsrohr 425 zugeführt. Der Winkel kann auch andere Werte annehmen, um die Eintrittsgeschwindigkeit des Stoffgemisches in den Luftstrom zu variieren. Der Luftstrom in dem Separationsrohr 425 läuft vertikal nach oben nnd wird durch ein (nicht gezeigtes) Gebläse erzeugt.

Beim Eintritt in das Separationsrohr 425 trifft das Stoffgemisch auf den Luftstrom, wobei auf die einzelnen und fluidisierfen Teile des Stoffgemisches eine nach oben gerichtete Kraft wirkt. Die Teile, die ein spezifisches Gewicht haben, das einen vorbestimmten Wert unterschreitet, werden dabei im Luftstrom mit einer nach oben gerichteten Geschwindigkeit beaufschlagt. Diese Leichtanteile werden als Massestrom 5 zur weiteren Verarbeitung weitergeleitet.

Die Schweranteile können durch die durch den Luftstrom ausgeübten Kräfte aufgrund der höheren Gravitationskräfte nicht mit einer nach oben gerichteten Geschwindigkeit beaufschlagt werden, sie erreichen eine nach unten gerichtete Geschwindigkeit und werden als Massestrom 4 abgeführt.

Ein Fallrohrsichter, der dieses leistet, ist zum Beispiel in der Station 6 vorgesehen.

Die Figur 5 zeigt eine Längsschittansicht eines besonders bevorzugten Fallrohrsichters, der zum Beispiel in der Station 9 vorgesehen ist. Dabei wird ein Massestrom eines Stoffgemisches 5 ebenfalls zuerst in einem Schneckenförderer 450 mit Schneckenwendel 451 fluidisiert und vereinzelt und dann durch ein Zuführungsrohr 410 in ein Separationsrohr 420 eingegeben. Analog zu dem in Figur 4 dargestellten Fallrohrsichter werden die Schweranteile mit einem Massestrom 4 abgeführt. Die Leichtanteile werden vertikal nach oben beschleunigt und werden entlang von Transportrohren 421, 422 und 423 als Massestrom 5 zur weiteren Verarbeitung weitergeleitet.

Ein Gebläse 430 erzeugt in dem Rohr 423 einen Luftstrom vertikal nach oben. Dadurch wird ein Unterdruck erzeugt, der in den Rohren 422, 421 und 420 einen Luftstrom in der oben beschriebenen Richtung erzeugt.

Ferner sind variable Öffnungsklappen 440 vorgesehen, um die Geschwindigkeit des Luftstromes während der Separation zu regeln. Bei geöffneten Klappen 440 wird Außenluft angesogen, die Geschwindigkeit des Luftstroms während der Separation dadurch verringert. Aufgrund der Saugwirkung können keinerlei Teile durch die Öffnungsklappen austreten und einen Verlust an Material hervorrufen.

Die Schneckenförderer 450 in beiden Ausführungsformen sind gegen die Außenluft abgedichtet, so daß diese nicht durch die Saugwirkung unkontrolliert in das Separationssystem gelangt. Auch sind die Abstände zwischen Schneckenwendel 451 und Gehäuse gering gehalten.

Es soll an dieser Stelle angemerkt werden, daß neben den in den Figuren 4 und 5 dargestellten Fallrohrsichtern auch weitere geometrische Anordnungen möglich sind, ferner die Einsatzorte der erfindungsgemäßen Fallrohrsichter frei gewählt werden können, insbesondere zum Beispiel auch der in Figur 5 dargestellte Fallrohrsichter in der Station 9 des oben beschriebenen Verfahrens eingesetzt werden kann. Die erfindungsgemäßen Fallrohrsichter sind zur Verdeutlichung ihrer bevorzugten Anwendungsgebiete innerhalb eines Wiederaufbereitungsverfahrens von Mischabfällen beschrieben worden, sie können aber auch bei anderen Anwendungen Platz finden, in denen eine Separation von Einzelelementen nach ihrem spezifischen Gewicht durchgeführt werden soll.

Ferner soll angemerkt werden, daß es aufgrund der hohen Effizienz der erfindungsgemäßen Fallrohrsichter auch möglich ist, daß der oben beschriebene Verfahrensschritt d), das Abtrennen von magnetischen Metallteilen, das normalerweise durch Magnetabscheider geschieht, auch entfallen kann, wenn keine zusätzliche Trennung von magnetischen Metallen erwünscht ist, oder der Verfahrensschritt d) im Gegensatz zu der oben beschriebenen Reihenfolge auch den Fallrohrsichtern nachgeschaltet vorgesehen werden kann, wobei aufgrund der bereits stattgefundenen Vorseparation der Verfahrensschritt d), das Abtrennen von magnetischen Metallteilen, aus dem Massestrom 4 effizienter ist als aus dem Massestrom 5.

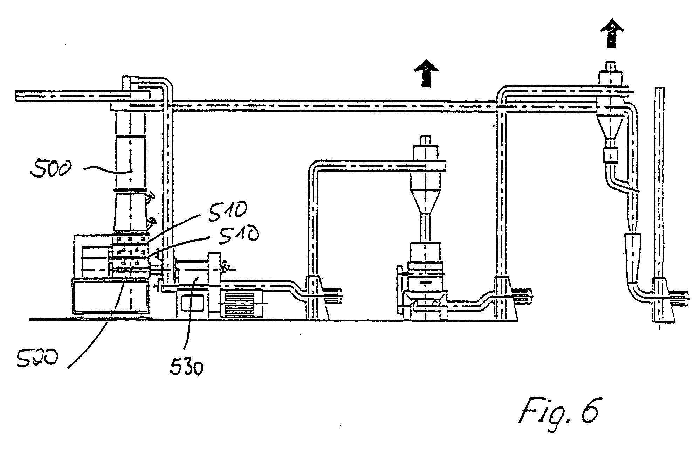

Figur 6 zeigt eine Längsschnittansicht eines Agglomerators. Bei einer tatsächlich gebauten Anlage werden beispielsweise sechs Agglomeratoren parallel geschaltet. Aus dem Puffersilo der Figur 3 wird der Mischkunststoff den sechs Agglomeratoren pneumatisch zugeführt. Zwei Vibrationsgrenztaster regulieren die optimale Füllhöhe. Im Einlauftrichter 500 sorgen Rührwerkswellen 510 für eine kontinuierliche Beschickung der Einlaufschnecke 520. Die Drehzahl der Einlaufschnecke 520 ist variabel einstellbar, beispielsweise im Bereich zwischen 16,8 l/min bis 100 l/min. Das von der Einlaufschnecke 520 zugeführte Material wird auf an sich bekarmte Art zwischen zwei in einem Agglomeratgehäuse 530 angeordneten Scheiben aufbereitet, die mit wechselbaren Knetleisten versehen sind. Dabei ist eine Scheibe als Statorscheibe und die andere als Rotorscheibe ausgebildet. Durch eine im Agglomeratorgehäuse 530 axial verschiebbare Lagerbuchse läßt sich der Abstand zwischen der Statorscheibe und der Rotorscheibe verstellen. Um eine thermische Überbeanspruchung des Materials zu vermeiden, sind beide Scheiben mit einer Kühlung ausgerüstet Dazu sind Bohrungen radial bis in das Zentrum der Scheiben geführt, so daß gesteuert Wasser zugeführt werden kann, um die Scheiben zu kühlen, damit die Temperaturen nicht in einen Bereich kommen, in dem der Kunststoff zu stark plastifiziert und die Scheiben verkleben würden. Die Kühlwassertemperatur sollte 40° C nicht übersteigen.

## Patentansprüche

1. Verfahren zum Aufbereiten von Mischabfällen für den Betrieb einer kontinuierlichen arbeitenden trockenmechanischen Aufbereitungsanlage, welche eine Mehrzahl von aufeinanderfolgenden durch jeweils zumindest eine Transportstrecke verbundene Bearbeitungsstationen zumindest mit den Schritten in der Abfolge Metallscheidung, Windsichtung und Papierentfernung anfweist, zwischen denen weitere Schritte vorgesehen sein können oder die unmittelbar aufeinanderfolgen, **dadurch gekennzeichnet, daß** der Gut-Materialstrom bei der Übergabe zur jeweils letzten Transportstrecke vor einer Bearbeitungsstation eine Beschleunigung erfährt, so daß die durchschnittliche tatsächliche Geschwindigkeit der Partikel des Gut-Materialstroms auf der letzten Transportstrecke unmittelbar vor Eintritt in die Bearbeitungsstation der Metallscheidung kleiner ist als unmittelbar vor dem Eintritt in die Bearbeitungsstation der Windsichtung und diese wiederum kleiner ist als die durchschnittliche Geschwindigkeit unmittelbar vor Eintritt in die Bearbeitungsstation der Papierentfernung.

2. Verfahren nach Anspruch 1, **dadurch gekennzeichnet, daß** der Mischabfall-Strom zwischen zwei benachbarten Stationen mit im wesentlichen konstanter Geschwindigkeit auf der jeweiligen Transportstrecke gefördert wird.

3. Verfahren nach Anspruch 1 oder 2, **dadurch gekennzeichnet, daß** in zumindest einer der Stationen ein Vorrat an gegebenenfalls vorbehandeltem Material zeitweilig gehalten wird.

4. Verfahren nach einem der Ansprüche 1 bis 3, zum Aufbereiten von Mischabfällen, die im wesentlichen aus Kunststoffen, Papier-Kunststoff-Verbundstoffen, Glas, Metallen, Papier, Pappe und weiteren Störstoffen bestehen, für den kontinuierlichen Betrieb einer Aufbereitungsanlage, mit den Schritten:
(a) Zerkleinern der Mischabfälle;
(b) Zwischenspeichern der zerkleinerten Mischabfälle;
(c) gleichmäßiges Weiterfördern der zwischengespeicherten Mischabfälle;
(d) Abtrennen von magnetischen Metallteilen;
(e) Abtrennen von unmagnetischen Teilen aus Materialien mit einem spezifischen Gewicht, welches ein festlegbares minimales spezifisches Gewicht überschreitet;
(f) Abtrennen von Papier, beispielsweise aus den Papier-Kunststoff-Verbundstoffen;
(g) Zwischenspeichern der erhaltenen Kunststofffraktion und
(h) Agglomerieren der Kunststofffraktion.

5. Verfahren nach Anspruch 4, **dadurch gekennzeichnet, daß** nach dem Schritt (g) erneut der Schritt (e) ausgeführt wird.

6. Verfahren nach Anspruch 4 oder 5, **dadurch gekennzeichnet, daß**
(i) der agglomerierte Kunststoff auf eine feste Komgröße zerkleinert wird.

7. Verfahren nach Anspruch 6, **dadurch gekennzeichnet, daß** nach dem Schritt (i) erneut der Schritt (d) ausgeführt wird.

8. Verfahren nach einem der Ansprüche 4 bis 7, **dadurch gekennzeichnet, daß** das zu bearbeitende Material pneumatisch gefördert wird.

9. Aufbereitungsanlage zum Durchführen des Verfahrens nach einem der Ansprüche 4 bis 8, mit
(a) mindestens einem Shredder zum Zerkleinern der Mischabfälle;
(b) einem ersten Puffersilo als einer ersten vorrathaltenden Station, in den die zerkleinerten Mischabfälle aus jedem der Shredder gefördert werden, wobei der Puffersilo eine Vorrichtung zum gleichrnäßigen Beschicken eines abtransportierenden Förderers aufweist;
(c) mindestens einem Magnetabscheider;
(d) mindestens einer Einrichtung zum Abtrennen von unmagnetischen Teilen aus Materialien mit einem spezifischen Gewicht, welches ein festlegbares minimales spezifisches Gewicht überschreitet;
(e) mindestens einer Vorrichtung zum Abtrennen von Papier beispielsweise aus den Papier-Kunststoff-Verbundstoffen;
(f) einem zweiten Puffersilo als einer zweiten vorrathaltenden Station, in dem die Kunststofffraktion aus jeder der Vorrichtungen zum Abtrennen von Papier gesammelt wird; und
(g) mindestens einem Agglomerator zum Agglomerieren der Kunststofffraktion,
wobei der Gut-Materialstrom bei der Übergabe zur jeweils letzten Transportstrecke vor einer Bearbeitungsstation eine Beschleunigung erfährt, so daß die durchschnittliche tatsächliche Geschwindigkeit der Partikel des Gut-Materialstroms auf der.letzten Transportstrecke unmittelbar vor Eintritt in die Bearbeitungsstation der Metallscheidung kleiner ist als unmittelbar vor dem Eintritt in die Bearbeitungsstation der Windsichtung und diese wiederum kleiner ist als die durchschnittliche Geschwindigkeit unmittelbar vor Eintritt in die Bearbeitungsstation der Papierentfernung.

10. Aufbereitungsanlage nach Anspruch 9, **dadurch gekennzeichnet, daß** dem Puffersilo, in dem die Kunststofffraktion gesammelt wird, zumindest eine weitere Einrichtung zum Abtrennen von unmagnetischen Teilen aus Materialien mit einem spezifischen Gewicht, welches ein festlegbares minimales spezifisches Gewicht überschreitet, nachgeschaltet ist.

11. Aufbereitungsanlage nach Anspruch 8 oder 10, **dadurch gekennzeichnet, daß** dem mindestens einen Agglomerator eine Einrichtung zum Zerkleinern des Agglomerats auf eine festgelegte Komgröße nachgeschaltet ist

12. Aufbereitungsanlage nach Anspruch 11, **dadurch gekennzeichnet, daß** mindestens ein weiterer Magnetabscheider vorgesehen ist, zu dem das zerkleinerte Agglomerat gefördert wird.

13. Aufbereitungsanlage nach Anspruch 9, **dadurch gekennzeichnet, daß** der erste Puffersilo aus einem Gehäuse (200) mit zumindest einer Öffnung (210) im oberen Bereich des Gehäuses (200) zum Einbringen des zwischenzuspeichernden Materials und zumindest einer Austragöffnung (220) für das Material besteht, wobei im Bodenbereich des Gehäuses (200) eine Vielzahl von Austragschnekken (230) vorgesehen ist, wobei die Austragschnecken (230) so angeordnet sind, daß sie in ihrer Wirkung die gesamte Bodenfläche des Gehäuses (200) überstreichen, und daß mindestens eine Vorlaufschnecke (240) vorgesehen ist, die das Material homogenisierend über zumindest einen Teil der Austragschnecken (230) fördert, so daß durch die mindestens eine Austragöffnung (220) ein vergleichmäßigter Massestrom des Materials ausgetragen wird.

14. Aufbereitungsanlage nach Anspruch 13, **dadurch gekennzeichnet, daß** beim ersten Puffersilo die Austragschnecken (230) mit jeweils unterschiedlichem Drehsinn arbeiten.

15. Aufbereitungsanlage nach Anspruch 13, **dadurch gekennzeichnet, daß** die Austragschnecken (230) im ersten Puffersilo parallel zueinander angeordnet sind und die Vorlaufschnecke (240) gegenüber den Austragschnecken (230) um 90° verdreht angeordnet ist

16. Aufbereitungsanlage nach Anspruch 9, **dadurch gekennzeichnet, daß** der zweite Puffersilo aus einem Gehäuse (300) mit zumindest einer Öffnung (310) im oberen Bereich des Gehäuses (300) zum Einbringen des zwischenzuspeichernden Materials und zumindest einer Austragöffnung (320) für das Material besteht, wobei zumindest eine unter Unterdruck stehende Auflockerungsschnecke (330) für im Puffersilo gespeichertes Material vorgesehen ist, und daß eine Absaugeinrichtung (340) Luft aus dem Gehäuse (300) der zumindest einen Auflockerungsschnecke (330) zuführt.

17. Aufbereitungsanlage nach Anspruch 16, **dadurch gekennzeichnet, daß** beim zweiten Puffersilo das Gehäuse (300) zum Bodenbereich hin konisch bzw. trapezförmig erweitert ist.

## Claims

1. A method for processing mixed waste for the operation of a continuously operating dry-mechanical processing plant which comprises a plurality of successive processing stations each connected by at least one transport section, at least with the steps in the sequence metal separation, air screening and paper removal, between which further steps can be provided or which follow one another directly, **characterised in that**, during the transfer to the last transport section each time before a processing station, the good-material flow undergoes an acceleration, so that the average actual speed of the particles of the good-material flow on the last transport section immediately before entry to the processing station for metal separation is slower than immediately before entry to the processing station for air screening and this in tum is slower than the average speed immediately before entry to the processing station for paper removal.

2. A method according to Claim 1, **characterised in that** the mixed waste flow between two adjoining stations is conveyed on the respective transport section at a substantially constant speed.

3. A method according to Claim 1 or 2, **characterised in that** a stock of optionally pre-treated material is temporarily stored in at least one of the stations.

4. A method according to any one of Claims 1 to 3, for processing mixed waste that substantially consists of plastics materials, paper/plastics composite materials, glass, metals, paper, cardboard and other waste materials, for the continuous operation of a processing plant, comprising the steps:
(a) Comminution of the mixed waste;
(b) Temporary storage of the comminuted mixed waste;
(c) Uniform onward feed of the temporarily stored mixed waste;
(d) Separation of magnetic metal parts;
(e) Separation of non-magnetic parts from materials having a specific gravity that exceeds a predeterminable minimum specific gravity;
(f) Separation of paper, for example, from the paper/plastics composite materials;
(g) Temporary storage of the resulting plastics material fraction; and
(h) Agglomeration of the plastics material fraction.

5. A method according to Claim 4, **characterised in that** after step (g), step (e) is carried out again.

6. A method according to Claim 4 or 5, **characterised in that**
(i) the agglomerated plastics material is comminuted to a fixed particle size.

7. A method according to Claim 6, **characterised in that** after step (i), step (d) is carried out again.

8. A method according to any one of Claims 4 to 7, **characterised in that** the material to be processed is conveyed pneumatically.

9. A processing plant for implementing the method according to any one of Claims 4 to 8, having
(a) at least one shredder for comminuting the mixed waste;
(b) a first buffer silo as a first stock-holding station, in which the comminuted mixed waste is conveyed from each of the shredders, the buffer silo having a device for uniform charging of a conveyor that transports the material away;
(c) at least one magnetic separator;
(d) at least one device for separating non-magnetic parts from material having a specific gravity that exceeds a predeterminable minimum specific gravity;
(e) at least one device for separating paper, for example, from the paper/plastics composite materials;
(f) a second buffer silo as a second stock-holding station in which the plastics material fraction from each of the devices for the separating of paper is collected; and
(g) at least one agglomerator for agglomerating the plastics material fraction,
wherein, during transfer to the respective last transport section before a processing station, the good-material flow undergoes an acceleration, so that the average actual speed of the particles of the good-material flow on the last transport section immediately before entry to the processing station for metal separation is slower than immediately before entry to the processing station for air screening and this in turn is slower than the average speed immediately before entry to the processing station for paper removal.

10. A processing plant according to Claim 9, **characterised in that** at least one further device for separating non-magnetic parts from material having a specific gravity that exceeds a predeterminable minimum specific gravity is connected downstream of the buffer silo in which the plastics material fraction is collected.

11. A processing plant according to Claim 8 or 10, **characterised in that** a device for comminuting the agglomerate to a fixed particle size is connected downstream of the at least one agglomerator.

12. A processing plant according to Claim 11, **characterised in that** at least one further magnetic separator is provided, to which the comminuted agglomerate is conveyed.

13. A processing plant according to Claim 9, **characterised in that** the first buffer silo consists of a housing (200) with at least one opening (210) in the upper region of the housing (200) for introduction of the material to be stored temporarily and at least one discharge opening (220) for the material, wherein, in the bottom region of the housing (200) there is provided a plurality of discharge screws (230), the discharge screws (230) being so arranged that their action covers the entire bottom area of the housing (200), and at least one feed screw (240) is provided, which conveys the material whilst homogenising it over at least a part of the discharge screws (230), so that an evened-out flowing mass of the material is discharged through the least one discharge opening (220)

14. A processing plant according to Claim 13, **characterised in that** in the first buffer silo, the discharge screws (230) each operate with a different direction of rotation.

15. A processing plant according to Claim 13, **characterised in that** the discharge screws (230) in the first buffer silo are arranged parallel to one another, and the feed screw (240) is arranged rotated through 90° relative to the discharge screws (230).

16. A processing plant according to Claim 9, **characterised in that** the second buffer silo consists of a housing (300) with at least one opening (310) in the upper region of the housing (300) for introduction of the material to be stored temporarily and at least one discharge opening (320) for the material, wherein at least one loosening-up screw under vacuum for material stored in the buffer silo is provided, and a suction device (340) supplies air from the housing (300) to the at least one loosening-up screw (330).

17. A processing plant according to Claim 16, **characterised in that** in the second buffer silo the housing (300) is flared conically or trapezoidally towards the bottom region.

## Revendications

1. Procédé de traitement de déchets mixtes pour le fonctionnement d'une installation de traitement mécanique à sec travaillant en continu, laquelle présente une pluralité de postes de traitement successifs reliés respectivement par au moins un tronçon de transport comprenant au moins les étapes dans l'ordre suivant séparation des métaux, séparation à air et enlèvement des papiers, entre lesquelles d'autres étapes peuvent être prévues ou qui se succèdent immédiatement, **caractérisé en ce que** le flux de matières-d'objets subit une accélération lors du transfert sur le dernier tronçon de transport avant un poste de traitement, si bien que la vitesse moyenne effective des particules du flux de matières-d'objets sur le dernier tronçon de transport immédiatement avant l'entrée dans le poste de traitement pour la séparation des métaux est moindre qu'immédiatement avant l'entrée dans le poste de traitement pour la séparation à air et que celle-ci est à nouveau moindre que la vitesse moyenne immédiatement avant l'entrée dans le poste de traitement pour l'enlèvement des papiers.

2. Procédé selon la revendication 1, **caractérisé en ce que** le flux de déchets mixtes est transporté sur le tronçon concerné entre deux postes de traitement voisins à une vitesse essentiellement constante.

3. Procédé selon la revendication 1 ou 2, **caractérisé en ce que** dans au moins un des postes, une réserve de matière éventuellement prétraitée est temporairement maintenue.

4. Procédé selon une des revendications 1 à 3, pour le traitement de déchets mixtes qui sont constitués essentiellement de matières synthétiques, de matières composites faites de papier et de matière synthétique, de verre, de métal, de papier, de carton et matières parasites, pour le fonctionnement en continu d'une installation de traitement comprenant les étapes:
(a) réduction en morceaux des déchets mixtes,
(b) stockage temporaire des déchets mixtes réduits en morceaux,
(c) transport uniforme des déchets mixtes temporairement stockés,
(d) séparation des parties métalliques magnétiques,
(e) séparation des parties non magnétiques des matières ayant un poids spécifique qui dépasse un poids spécifique minimal définissable,
(f) séparation du papier, par exemple des matières composites faites de papier et de matière synthétique,
(g) stockage temporaire de la fraction de matière synthétique obtenue, et
(h) agglomération de la fraction de matière synthétique.

5. Procédé selon la revendication 4, **caractérisé en ce que** l'étape (e) est exécutée à nouveau après l'étape (g).

6. Procédé selon la revendication 4 ou 5, **caractérisé en ce que**
(i) la matière synthétique agglomérée est broyée à une granulométrie déterminée.

7. Procédé selon la revendication 6, **caractérisé en ce que** l'étape (d) est exécutée à nouveau après l'étape (i).

8. Procédé selon une des revendications 4 à 7, **caractérisé en ce que** la matière à traiter est transportée de manière pneumatique.

9. Installation de traitement pour l'exécution du procédé selon une des revendications 4 à 8, comprenant
(a) au moins un déchiqueteur pour réduire en morceaux les déchets mixtes,
(b) un premier silo tampon comme premier poste de stockage dans lequel les déchets mixtes réduits en morceaux provenant de chacun des déchiqueteurs sont transportés, le silo tampon présentant un dispositif pour le chargement uniforme d'un transporteur automatique,
(c) au moins un séparateur magnétique,
(d) au moins un dispositif pour la séparation des parties non magnétiques des matières ayant un poids spécifique qui dépasse un poids spécifique minimal définissable,
(e) au moins un dispositif pour la séparation du papier, par exemple des matières composites faites de papier et de matière synthétique,
(f) un deuxième silo tampon comme deuxième poste de stockage, dans lequel la fraction de matière synthétique provenant de chacun des dispositifs de séparation du papier est collectée, et
(g) au moins un agglomérateur pour l'agglomération de la fraction de matière synthétique.
dans laquelle le flux de matières - d'objets subit une accélération lors du transfert sur le dernier tronçon de transport concerné avant un poste de traitement, si bien que la vitesse moyenne effective des particules du flux de matières-d'objets sur le dernier tronçon de transport immédiatement avant l'entrée dans le poste de traitement pour la séparation des métaux est moindre qu'immédiatement avant l'entrée dans le poste de traitement pour la séparation à air et que celle-ci est à nouveau moindre que la vitesse moyenne immédiatement avant l'entrée dans le poste de traitement pour l'enlèvement des papiers.

10. Installation de traitement selon la revendication 9, **caractérisée en ce qu'**au moins un autre dispositif pour la séparation des parties non magnétiques des matières ayant un poids spécifique qui dépasse un poids spécifique minimal définissable fait suite au silo tampon dans lequel la fraction de matière synthétique est rassemblée.

11. Installation de traitement selon la revendication 8 ou 10, **caractérisée en ce qu'**un dispositif pour le broyage de l'agglomérat à une granulométrie déterminée fait suite au dit au moins un agglomérateur.

12. Installation de traitement selon la revendication 11, **caractérisée en ce qu'**il est prévu au moins un autre séparateur magnétique vers lequel l'agglomérat broyé est transporté.

13. Installation de traitement selon la revendication 9, **caractérisée en ce que** le premier silo tampon est constitué d'une caisse (200) avec au moins une ouverture (210) dans la région supérieure de la caisse (200) pour l'introduction de la matière à stocker temporairement et au moins une ouverture de décharge (220) pour la matière, dans laquelle dans la région du fond de la caisse (200) une pluralité de vis d'extraction (230) est prévue, les vis d'extraction (230) étant disposées de telle manière que dans leur action, elles balaient toute la surface du fond de la caisse (200), et **en ce qu'**au moins une vis préliminaire (240) qui transporte la matière en l'homogénéisant au-dessus d'au moins une partie des vis d'extraction (230) est prévue de sorte qu'un flux de masse plus uniforme est déchargé par ladite au moins une ouverture de décharge (220).

14. Installation de traitement selon la revendication 13, **caractérisée en ce que** dans le cas du premier silo tampon, les vis d'extraction (230) fonctionnent respectivement dans des sens de rotation différents.

15. Installation de traitement selon la revendication 13, **caractérisée en ce que** les vis d'extraction (230) sont disposées en parallèle les unes avec les autres dans le premier silo tampon et la vis préliminaire (240) est disposée tournée de 90° par rapport aux vis d'extraction (230).

16. Installation de traitement selon la revendication 9, **caractérisée en ce que** le deuxième silo tampon est constitué d'une caisse (300) avec au moins une ouverture (310) dans la région supérieure de la caisse (300) pour l'introduction de la matière à stocker temporairement et au moins une ouverture de décharge (320) pour la matière, au moins une vis de désagrégation mise sous sous-pression étant prévue pour la matière stockée dans le silo tampon, et **en ce que** un dispositif d'aspiration (340) fournit de l'air provenant de la caisse (300) à ladite au moins une vis de désagrégation (330).

17. Installation de traitement selon la revendication 16, **caractérisée en ce que** dans le cas du deuxième silo tampon, la caisse (300) est élargie en forme de cône ou de trapèze en allant vers la région du fond.
